# FASCICULE DE BREVET EUROPEEN

(11) **EP 2 678 733 B1**
(45) Date de publication et mention de la délivrance du brevet: **02.08.2017**
(21) Numéro de dépôt: 12709929.9
(22) Date de dépôt: 17.02.2012
(51) Int. Cl.: G02C 11/02, G02C 5/14, B29D 12/02, G02C 5/18

(54) **BRANCHE POUR LUNETTES, LUNETTES COMPRENANT AU MOINS UNE TELLE BRANCHE ET PROCEDE D'ASSEMBLAGE D'UNE TELLE BRANCHE**
SEITENBÜGEL FÜR BRILLEN, BRILLE MIT MINDESTENS EINEM DERARTIGEN SEITENBÜGEL SOWIE VERFAHREN ZUR MONTAGE EINES SOLCHEN SEITENBÜGELS
SIDEPIECE FOR EYEGLASSES, EYEGLASSES INCLUDING AT LEAST ONE SUCH SIDEPIECE, AND METHOD FOR ASSEMBLING SUCH A SIDEPIECE

(30) Priorité: 24.02.2011 FR 1151495
(43) Date de publication de la demande: 01.01.2014
(73) Titulaire: Killine Optical Ltd, Macao (MO)
(72) Inventeur: GARDAZ, François, Macao (MO)
(74) Mandataire: Chevalier, Renaud Philippe
(86) Numéro de dépôt international: PCT/FR2012/050346
(87) Numéro de publication internationale: WO 2012/114026

(56) Documents cités:
- DE-U1- 29 803 017
- FR-A3- 2 605 422
- GB-A- 733 818
- US-A- 3 582 192
- US-A- 4 958 923
- US-A1- 2007 242 211

## Description

La présente invention concerne une branche de lunettes et des lunettes comprenant au moins une telle branche. Par ailleurs, la présente invention concerne un procédé d'assemblage d'une telle branche.

La présente invention trouve notamment application dans le domaine des lunettes de vue, des lunettes solaires, des lunettes de protection et/ou des lunettes de sécurité.

De façon connue, des lunettes comportent une façade optique pourvue de verres optiques et/ou solaires et/ou de protection et/ou de sécurité. Les lunettes comprennent généralement une monture, destinée à supporter la façade optique, et deux branches de lunettes, parfois dénommées branches latérales, qui sont reliées à la monture par une articulation.

Une branche comporte une armature qui est généralement rigide et qui s'étend entre une extrémité avant et une extrémité arrière. L'extrémité avant est destinée à être articulée sur une monture. L'extrémité arrière est destinée à recevoir un embout, dont la fonction est de contourner l'oreille d'un utilisateur et éventuellement de reposer sur cette oreille.

Pour modifier l'aspect des lunettes et en particulier pour décorer les branches, US2009096982A1 décrit des branches de lunettes sur lesquelles sont disposés des éléments de décoration amovibles.

Cependant, de tels éléments de décoration risquent de se décrocher des branches. En outre, leur fixation sur les branches est relativement difficile à réaliser.

L'état de la technique peut également être illustré par l'enseignement du document US 2007/0242211 A1 qui propose de ménager, sur la façade externe de la branche de lunettes, une encoche s'étendant dans l'épaisseur de la branche et sur sa longueur jusqu'à l'extrémité avant de la branche, pour recevoir un élément décoratif, inséré dans l'encoche via l'extrémité avant, cet élément décoratif se présentant sous la forme d'une plaque qui compense la réduction d'épaisseur induite par l'encoche.

Cependant, une telle solution avec encoche ne permet pas de couvrir indépendamment deux parties d'une armature de branche. Le même problème se pose pour les éléments de décorations amovibles du document US3582192A. La présente invention vise notamment à résoudre, en tout ou partie, les problèmes mentionnés ci-avant.

A cet effet, l'invention a pour objet une branche, pour lunettes, comportant une armature s'étendant entre une extrémité avant, destinée à être articulée sur une monture, et une extrémité arrière opposée, la branche étant caractérisée en ce qu'elle comprend au moins :
- une première bande adaptée pour recouvrir une première partie de l'armature, la première bande présentant de préférence une surface externe décorative ;
- une deuxième bande adaptée pour recouvrir une deuxième partie de l'armature, la deuxième bande présentant de préférence une surface externe décorative ;
- des premiers moyens de liaison ménagés sur ladite première partie de l'armature et formant rail ou glissière, les premiers moyens de liaison étant, d'une part, adaptés pour guider en translation la première bande et pour maintenir la première bande sur l'armature et, d'autre part, s'étendant jusqu'à l'extrémité avant de façon à permettre l'introduction de la première bande par l'extrémité avant ; et
- des deuxièmes moyens de liaison ménagés sur ladite deuxième partie de l'armature et formant rail ou glissière, les deuxièmes moyens de liaison étant, d'une part, adaptés pour guider en translation au moins la deuxième bande et pour maintenir la deuxième bande sur l'armature et, d'autre part, s'étendant jusqu'à l'extrémité avant de façon à permettre l'introduction de la deuxième bande par l'extrémité avant.

En d'autres termes, la branche comprend au moins deux bandes et deux rails ou glissières, sur lesquels sont insérées les bandes, qui peuvent avoir une fonction décorative.

Ainsi, une telle branche de lunettes permet un assemblage et un désassemblage simple et rapide des bandes sur l'armature. De plus, à l'état assemblé, les bandes sont maintenues sur l'armature sans risque de décrochage.

Dans la présente demande, le terme « avant » désigne un élément destiné à être situé près de la monture, donc près du visage de l'utilisateur. Dans la présente demande, le terme « arrière » désigne un élément destiné à être situé près d'un embout des lunettes, donc près de l'oreille de l'utilisateur.

Selon un mode de réalisation, l'armature présente un bord supérieur et un bord inférieur, les premiers moyens de liaison étant agencés sur tout ou partie du bord supérieur, les deuxièmes moyens de liaison étant agencés sur tout ou partie du bord inférieur.

En d'autres termes, les premiers moyens de liaison sont agencés sur le haut de l'armature et les deuxièmes moyens de liaison sont agencés sur le bas de l'armature.

Ainsi, la première bande peut recouvrir et décorer le haut de l'armature et la deuxième bande peut recouvrir et décorer le bas de l'armature.

Dans la présente demande, un élément « supérieur » ou « haut » est situé relativement près du sommet de la tête d'un utilisateur se tenant debout et tête droite, tandis qu'un élément « inférieur » ou « bas » en est plus éloigné.

Selon un mode de réalisation, les premiers moyens de liaison et/ou les deuxièmes moyens de liaison s'étendent sensiblement jusqu'à l'extrémité avant de façon à permettre respectivement l'introduction de la première bande ou de la deuxième bande par l'extrémité avant.

Ainsi, un utilisateur peut introduire et dégager la ou les bande(s) par le côté avant des lunettes, aussi souvent qu'il le souhaite pour modifier l'aspect des lunettes et sans avoir à démonter d'autres composants de la branche.

Selon un mode de réalisation, les premiers moyens de liaison et/ou les deuxièmes moyens de liaison présentent respectivement au moins un élément mâle faisant saillie sur une face interne de l'armature et/ou sur une face externe de l'armature, l'élément mâle s'étendant au moins le long d'un tronçon de l'armature, et dans laquelle au moins l'une de la première bande et de la deuxième bande présente une rainure de forme complémentaire à l'élément mâle.

Ainsi, un tel élément mâle et une telle rainure peuvent coopérer pour guider en translation et maintenir en place une bande sur l'armature.

Dans la présente demande, le terme « interne » qualifie un élément tourné vers la tête d'un utilisateur portant les lunettes. Dans la présente demande, le terme « externe » qualifie un élément tourné du côté opposé à la tête d'un utilisateur portant les lunettes.

Selon un mode de réalisation, l'armature a une section transversale comprenant :
- une âme sensiblement plate ; et
- deux ailes sensiblement plates disposées perpendiculairement à l'âme et symétriquement par rapport à l'âme, chaque aile définissant un élément mâle.

En d'autres termes, l'armature a une section transversale sensiblement en forme de « H » couché.

Ainsi, une telle armature est relativement simple à fabriquer.

Selon un autre mode de réalisation, les premiers moyens de liaison et/ou les deuxièmes moyens de liaison s'étendent de manière discontinue ou intermittente sensiblement entre l'extrémité avant et un point intermédiaire situé entre l'extrémité avant et l'extrémité arrière.

En d'autres termes, les rails forment des tronçons disjoints. Selon un mode de réalisation, les premiers moyens de liaison et/ou les deuxièmes moyens de liaison s'étendent de manière continue sensiblement entre l'extrémité avant et un point intermédiaire situé entre l'extrémité avant et l'extrémité arrière.

Ainsi, le guidage et le maintien de la ou chaque bande est assuré sur toute une portion de l'armature entre l'extrémité avant et le point intermédiaire.

Selon un mode de réalisation, les premiers moyens de liaison et/ou les deuxièmes moyens de liaison sont semblables

En particulier, les premiers moyens de liaison et/ou les deuxièmes moyens de liaison sont symétriques au moins par rapport à une ligne médiane de l'armature.

Ainsi, la première bande et la deuxième bande, ou les première et deuxième bandes des deux branches, sont interchangeables et l'utilisateur peut les fixer sur l'armature sans avoir à les distinguer l'une de l'autre.

Selon un mode de réalisation, au moins l'une de la première bande et de la deuxième bande est formée au moins partiellement en un matériau élastiquement déformable, au moins l'une de la première bande et de la deuxième bande étant de préférence issue de moulage.

Selon un mode de réalisation, au moins l'une de la première bande et de la deuxième bande est intégralement formée en un matériau élastiquement déformable.

Ainsi, de telles bandes peuvent être conformées à une branche quelle que soit sa forme, rectiligne ou curviligne, ou son rayon de courbure.

Selon un mode de réalisation, au moins deux desdites bandes sont conformées pour être jointives de façon à masquer totalement ou partiellement l'armature.

Ainsi, la ou chaque bande habille ou décore l'armature sur plusieurs faces, ce qui confère à la branche un aspect de qualité élevée. Les bandes peuvent être jointives sur une ou plusieurs surface(s).

Selon un mode de réalisation, au moins l'une de la première bande et de la deuxième bande présente une extrémité bouchée agencée pour recouvrir l'extrémité avant de l'armature.

Ainsi, la ou chaque bande habille ou décore l'extrémité avant de l'armature, laquelle est partiellement visible par un observateur situé en face de l'utilisateur des lunettes.

Selon un mode de réalisation, l'extrémité bouchée a une forme complémentaire à l'extrémité avant des premiers moyens de liaison ou à l'extrémité avant des deuxièmes moyens de liaison.

Ainsi, une telle forme complémentaire permet à une bande de coopérer avec l'extrémité avant de l'armature. Cette complémentarité de forme remplit la fonction de butée de mise en position, ce qui empêche l'extrémité arrière d'une bande de venir en contact avec l'embout et évite ainsi la déformation et le matage disgracieux de cette extrémité arrière.

Selon un mode de réalisation alternatif, l'extrémité bouchée a une forme complémentaire à l'extrémité arrière des premiers moyens de liaison ou à l'extrémité arrière des deuxièmes moyens de liaison.

Selon un mode de réalisation, l'armature comporte au moins un organe de maintien adapté pour immobiliser la première bande ou la deuxième bande en translation par rapport à l'armature, au moins un organe de maintien étant de préférence agencé pour coopérer avec une terminaison arrière de la première bande ou avec une terminaison arrière de la deuxième bande.

Ainsi, un tel organe de maintien permet de maintenir en place une bande sur l'armature, lorsque la bande est en position assemblée.

Selon un autre mode de réalisation, l'armature comporte deux organes de maintien adaptés pour immobiliser respectivement la première bande et la deuxième bande en translation par rapport à l'armature.

Selon un mode de réalisation, au moins un organe de maintien est formé par un bossage agencé pour coopérer avec un trou ménagé dans la première bande ou dans la deuxième bande.

Ainsi, un tel bossage permet de réaliser un organe de maintien fiable et de structure simple.

Selon un mode de réalisation, au moins un organe de maintien est formé par un trou agencé pour coopérer avec un bossage réalisé sur la première bande ou sur la deuxième bande.

Ainsi, un tel trou permet de réaliser un organe de maintien fiable et de structure simple. Le bossage est donc disposé sur la première bande ou sur la deuxième bande.

Selon un mode de réalisation, un organe de maintien est agencé pour coopérer avec une terminaison arrière de la première bande ou de la deuxième bande.

En d'autres termes, cet organe de maintien est disposé du côté de l'embout des lunettes plutôt que vers la monture.

Ainsi, un tel organe de maintien permet d'immobiliser en translation une bande introduite par l'extrémité avant.

Dans un mode de réalisation alternatif, un organe de maintien est agencé pour coopérer avec une terminaison avant de la première bande ou de la deuxième bande, laquelle est dans ce cas introduite par l'arrière de l'armature.

Ainsi, un tel organe de maintien permet d'immobiliser en translation une bande introduite par l'extrémité arrière.

Selon un mode de réalisation, la branche comprend en outre :
- au moins une troisième bande adaptée pour recouvrir au moins une troisième partie de l'armature ; et
- au moins des troisièmes moyens de liaison ménagés sur ladite troisième partie de l'armature, les troisièmes moyens de liaison étant adaptés pour guider en translation au moins la troisième bande et pour maintenir la troisième bande sur l'armature.

Ainsi, une telle troisième bande permet de moduler davantage l'aspect de la branche, donc des lunettes.

De plus, la présente invention a pour objet des lunettes comprenant une monture et étant caractérisées en ce qu'elles comprennent en outre au moins une branche, de préférence deux branches, telles que précédemment exposées.

Ainsi, un utilisateur de telles lunettes peut modifier l'aspect d'une ou des deux branche(s) simplement et rapidement.

Par ailleurs, la présente invention a pour objet un procédé d'assemblage d'une branche telle que précédemment exposée qui est articulée sur une monture de lunettes telles que précédemment exposée, le procédé comprenant les étapes :
- plier la branche, de façon à la placer près de la monture ;
- engager par l'extrémité avant la première bande et/ou la deuxième bande respectivement sur les premiers moyens de liaison et sur les deuxièmes moyens de liaison formant rails ou glissières s'étendant jusqu'à l'extrémité avant ;
- guider en translation la première bande et la deuxième bande respectivement sur les premiers moyens de liaison et sur les deuxièmes moyens de liaison, de sorte que la première bande et la deuxième bande recouvrent respectivement la première partie de l'armature et la deuxième partie de l'armature ; et
- ouvrir la branche, de façon à la placer en position d'utilisation.

Ainsi, un utilisateur peut assembler rapidement et simplement une branche dans le but de modifier son aspect.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue en perspective d'une partie de lunettes conforme à l'invention comprenant une branche conforme à un premier mode de réalisation de l'invention, dans une étape initiale d'un procédé d'assemblage conforme à l'invention ;
- la figure 2 est une vue en perspective, suivant un angle différent de la figure 1, de la branche de la figure 1, dans une étape ultérieure du procédé d'assemblage conforme à l'invention ;
- la figure 3 est une vue similaire à la figure 2 de la branche de la figure 2, dans une étape ultérieure du procédé d'assemblage conforme à l'invention ;
- la figure 4 est une vue similaire à la figure 3 de la branche de la figure 3, dans une étape ultérieure du procédé d'assemblage conforme à l'invention ;
- la figure 5 est une coupe suivant le plan V à la figure 4 ;
- la figure 6 est une vue similaire à la figure 2 illustrant une armature appartenant à la branche de la figure 1 ;
- la figure 7 est une vue de côté de l'armature de la figure 6 ;
- la figure 8 est une vue de dessus de l'armature de la figure 6 ;
- la figure 9 est une coupe suivant la ligne IX-IX à la figure 8 ;
- la figure 10 est une vue de côté d'une bande appartenant à la branche de la figure 1 ;
- la figure 11 est une vue de dessus de la bande de la figure 10;
- la figure 12 est une coupe suivant la ligne XII- XII à la figure 10 ;
- la figure 13 est une coupe suivant la ligne XIII- XIII à la figure 10 ;
- la figure 14 est une coupe suivant la ligne XIV- XIV à la figure 10 ;
- la figure 15 est une vue similaire à la figure 9 d'une partie d'une branche conforme à un deuxième mode de réalisation de l'invention ;
- la figure 16 est une vue partiellement similaire à la figure 15 d'une partie d'une branche conforme à un troisième mode de réalisation de l'invention ;
- la figure 17 est une vue similaire à la figure 16 d'une partie d'une branche conforme à un quatrième mode de réalisation de l'invention ;
- la figure 18 est une section similaire à la figure 5 illustrant une branche conforme à un cinquième mode de réalisation de l'invention ;
- la figure 19 est une vue en similaire à la figure 6 illustrant une partie de branche conforme à un sixième mode de réalisation de l'invention ;
- la figure 20 est une vue similaire à la figure 3 d'une partie de la branche de la figure 19 à l'état assemblé suivant un procédé conforme à l'invention ; et
- la figure 21 est une vue similaire à la figure 7 d'une partie de la branche de la figure 19.

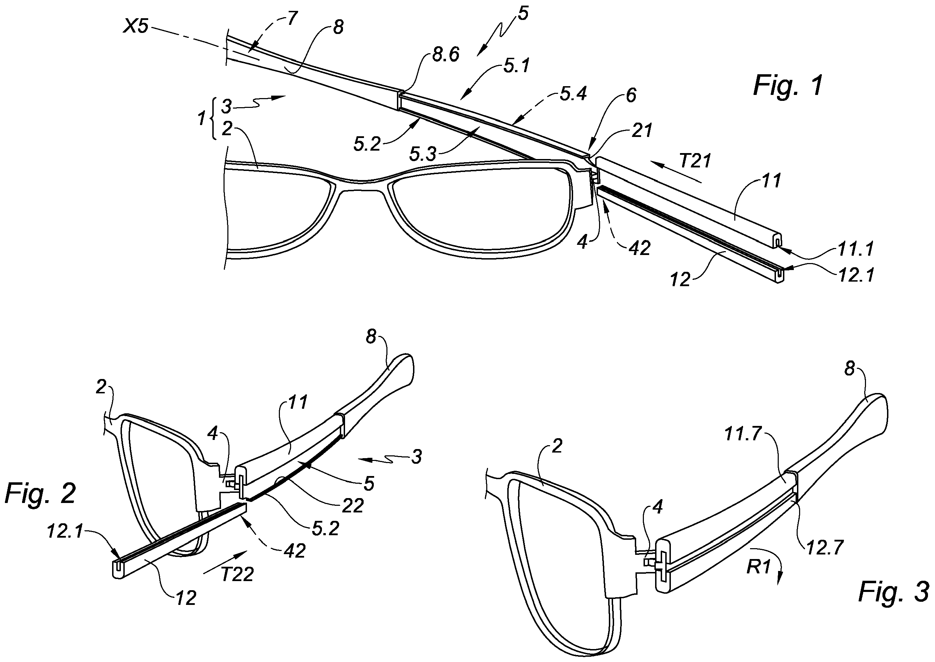

La figure 1 illustre des lunettes 1 comprenant une monture 2 et une branche 3. La branche 3 est articulée sur la monture 2 au moyen d'une articulation 4.

La branche 3 comporte une armature 5 qui s'étend entre une extrémité avant 6 et une extrémité arrière 7, parallèlement à une ligne longitudinale X5. La ligne longitudinale X5 est ici légèrement curviligne. L'extrémité arrière 7 est opposée à l'extrémité avant 6 et elle reçoit un embout 8 qui entoure une portion arrière de l'armature 5.

L'armature 5 présente un bord supérieur 5.1 et un bord inférieur 5.2. L'armature 5 peut avoir une structure rigide, qui peut être réalisée, donc formée, notamment en acier, en matériau composite ou en matériau plastique de synthèse. Dans l'exemple des figures, l'armature 5 est réalisée, donc formée, en un alliage de nickel, de cuivre et de fer connu sous la dénomination « monel ».

La branche 3 comprend une première bande 11 et une deuxième bande 12. La première bande 11 et la deuxième bande 12 peuvent être réalisées, donc formées, au moins partiellement en un matériau élastiquement déformable, par exemple en caoutchouc. Dans l'exemple des figures, la première bande 11 et la deuxième bande 12 sont intégralement réalisées, donc formées, en un matériau élastiquement déformable et issues de moulage.

Comme le montre la figure 2, la première bande 11 est adaptée pour recouvrir une première partie de l'armature 5, en l'occurrence la partie haute dont fait partie le bord supérieur 5.1. Comme le montre la figure 3, la deuxième bande 12 est adaptée pour recouvrir une deuxième partie de l'armature 5, en l'occurrence la partie basse dont fait partie le bord inférieur 5.2.

La première bande 11 et la deuxième bande 12 peuvent présenter une surface externe décorative. Dans la présente demande, le terme « surface externe décorative » désigne une surface externe munie d'un décor. Un tel décor peut se présenter sous la forme d'une couleur choisie et/ou de motifs choisis, par exemple des motifs en relief et/ou de motifs en creux et/ou de motifs colorés et/ou motifs texturés et/ou matières différentes.

La branche 3 comprend en outre un rail haut 21, visible aux figures 1, 5, 6, 7, 9 et 11, et un rail bas 22, visible aux figures 2, 5, 7 et 9. Dans l'exemple des figures, le rail haut 21 et le rail bas 22 sont semblables et ils s'étendent sensiblement suivant la ligne longitudinale X5.

Le rail haut 21 forme des premiers moyens de liaison ménagés sur la première partie de l'armature 5. Dans l'exemple des figures, ces premiers moyens de liaison sont ménagés ou agencés sur la majeure partie du bord supérieur 5.1. Le rail haut 21 est soudé sur l'armature 5.

Le rail haut 21 est adapté pour guider en translation, sensiblement selon la direction de la ligne longitudinale X5, la première bande 11. Cette translation est symbolisée à la figure 2 par une flèche T21. De plus, le rail haut 21 est adapté pour maintenir la première bande 11 sur l'armature 5.

Le rail bas 22 forme des deuxièmes moyens de liaison ménagés sur la deuxième partie de l'armature 5. Dans l'exemple des figures, ces deuxièmes moyens de liaison sont ménagés ou agencés sur la majeure partie du bord inférieur 5.2. Le rail bas 22 est soudé sur l'armature 5.

Le rail bas 22 est adapté pour guider en translation, sensiblement selon la direction de la ligne longitudinale X5, la deuxième bande 12. Cette translation est symbolisée à la figure 2 par une flèche T22. De plus, le rail bas 22 est adapté pour maintenir la deuxième bande 12 sur l'armature 5.

Comme le montre la figure 1, le rail haut 21 et le rail bas 22 s'étendent sensiblement jusqu'à l'extrémité avant 6 de façon à permettre respectivement l'introduction de la première bande 11 et de la deuxième bande 12 par l'extrémité avant 6.

Lorsque la branche 3 est pliée et placée près de la monture 2, un utilisateur peut engager par l'extrémité avant 6 la première bande 11 sur le rail haut 21.Puis, l'utilisateur peut guider en translation, suivant la flèche T21, la première bande 11 sur le rail haut 21, de sorte que la première bande 11 recouvre la partie haute de l'armature 5, comme le montre la figure 2.

Comme le montre la figure 2, après son guidage en translation, la première bande 11 est maintenue en place sur l'armature 5 par le rail haut 21. L'utilisateur peut alors engager par l'extrémité avant 6 la deuxième bande 12 sur le rail bas 22. Puis, l'utilisateur peut guider en translation, suivant la flèche T22, la deuxième bande 12 sur le rail haut 22, de sorte que la deuxième bande 12 recouvre la partie basse de l'armature 5, comme le montre la figure 3.

Comme le montre la figure 3, après avoir réalisé un procédé d'assemblage conforme à l'invention, la branche 3 est dépliée, suivant une flèche R1, pour être placée dans une position de port des lunettes par l'utilisateur.

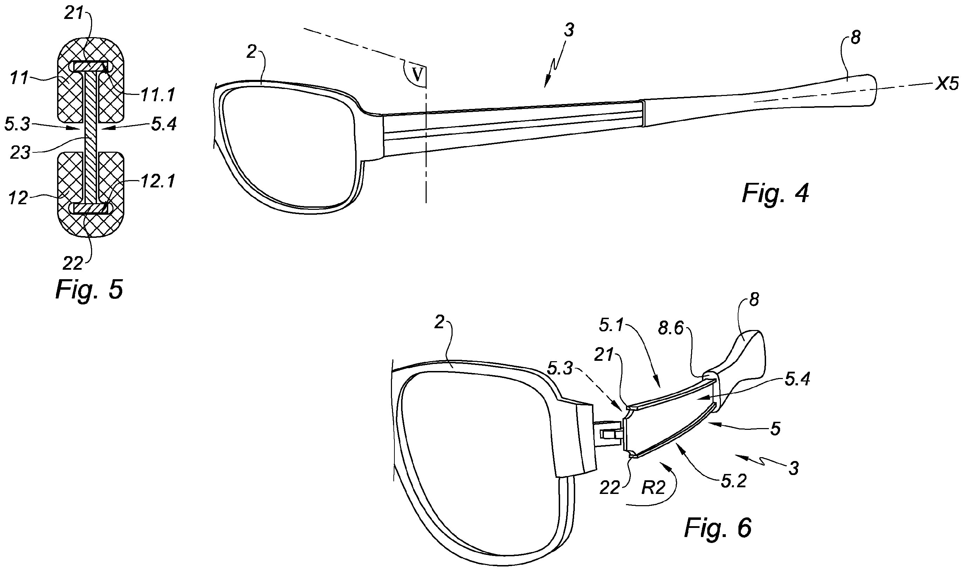

Comme le montre la figure 4, après avoir réalisé un procédé d'assemblage conforme à l'invention, la branche 3 est dans son état assemblé, dans lequel la première bande 11 recouvre la partie haute de l'armature 5 et la deuxième bande 12 recouvre la partie basse de l'armature 5. En d'autres termes, la branche 3 est habillée et décorée par la première bande 11 et par la deuxième bande 12.

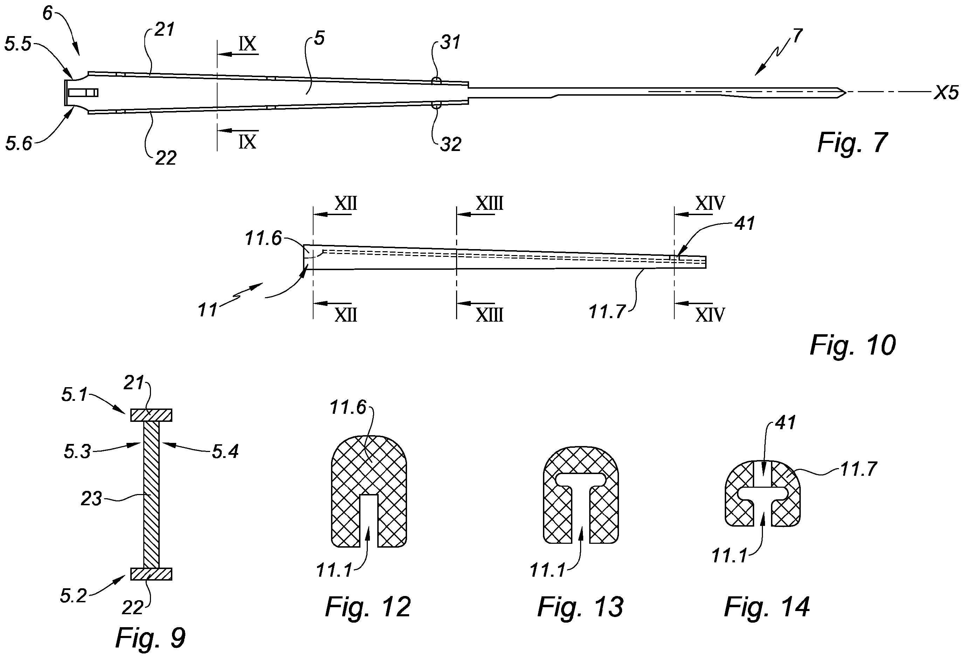

Comme le montrent les figures 5 et 9, pour guider et maintenir respectivement la première bande 11 et la deuxième bande 12, le rail haut 21 et le rail bas 22 présentent chacun un élément mâle qui fait saillie sur une face interne 5.3 de l'armature 5 et sur une face externe 5.4 de l'armature 5.

À la figure 6, la branche 3 est fermée ou repliée suivant une flèche R2, de façon à la placer en position préalable à la réalisation d'un procédé d'assemblage conforme à l'invention.

Comme le montrent les figures 6, 7, 8 et 9, l'armature 5 est formée par un profilé, dont une section transversale comprend une âme 23 sensiblement plate et deux ailes que forment le rail haut 21 et le rail bas 22. Le rail haut 21 et le rail bas 22 sont sensiblement plats et disposées perpendiculairement à l'âme 23 et symétriquement par rapport à l'âme 23. Chaque aile, à savoir le rail haut 21 ou le rail bas 22, définit un élément mâle en forme de « T ».

L'élément mâle en forme de « T » s'étend le long d'un tronçon de l'armature 5 entre l'extrémité avant 6 et une terminaison avant 8.6 de l'embout 8. La terminaison avant 8.6 définit un point intermédiaire situé entre l'extrémité avant 6 et l'extrémité arrière 7. Le rail haut 21 et le rail bas 22 s'étendent de manière continue sensiblement entre l'extrémité avant 6 et la terminaison avant 8.6.

Dans la mesure où la première bande 11 est semblable à la deuxième bande 12, la description de la première bande 11 donnée ci-après en relation avec les figures 10, 11, 12, 13 et 14 peut être transposée à la description de la deuxième bande 12.

Comme le montrent les figures 5, 13 et 14, la première bande 11 présente une première rainure 11.1 qui a une forme complémentaire au rail haut 21, donc à un élément mâle en forme de « T ». De même, la deuxième bande 12 présente une deuxième rainure 12.1 de forme complémentaire au rail bas, donc à un élément mâle en forme de « T ». Ces complémentarités de formes permettent de remplir les fonctions de guidage et de maintien respectivement de la première bande 11 et de la deuxième bande 12 sur l'armature 5.

Comme le montre la figure 5, la première bande 11 est conformée pour recouvrir une surface interne et une surface externe de la partie haute de l'armature 5. De même, la deuxième bande 12 est conformée pour recouvrir une surface interne et une surface externe de la partie basse de l'armature 5. En d'autres termes, la première bande 11 et la deuxième bande 12 habillent chacune partiellement le bord supérieur 5.1 et les faces interne 5.3 et externe 5.4 de l'armature 5.

Comme le montrent les figures 10, 11 et 12, la première bande 11 présente une extrémité bouchée 11.6 qui est agencée pour recouvrir l'extrémité avant 6 de l'armature 5. L'extrémité bouchée 11.6 a une forme complémentaire à l'extrémité avant 6 du rail haut 21. L'extrémité bouchée 11.6 est formée par une surépaisseur de matière venant obturer une partie de la rainure 11.1.

Par ailleurs, l'armature 5 comporte un bossage haut 31 et un bossage bas 32, visibles à la figure 7, qui forment chacun un organe de maintien adapté pour immobiliser respectivement la première bande 11 et la deuxième bande 12 en translation par rapport à l'armature 5.

À cet effet, le bossage haut 31 est agencé pour coopérer avec un premier trou 41, visible aux figures 10, 11 et 41, qui est ménagé dans la première bande 11. De même, le bossage bas 32 est agencé pour coopérer avec un deuxième trou 42, symbolisé aux figures 1 et 2, qui est ménagé dans la deuxième bande 12.

Le bossage haut 31 est situé près vers l'arrière de la première bande 11 et le bossage bas 32 est situé vers l'arrière de la deuxième bande 12. Ainsi, le bossage haut 31 et le bossage bas 32 sont agencés pour coopérer respectivement avec une terminaison arrière 11.7 de la première bande 11 et avec une terminaison arrière 12.7 de la deuxième bande 12.

Par ailleurs, l'extrémité avant 6 présente une découpe ou un congé courbe haut 5.5 et un congé courbe bas 5.6. Sur la première bande 11 et la deuxième bande 12, les extrémités bouchées 11.6 et équivalent sont conformées pour coopérer par complémentarité de formes respectivement avec le congé courbe haut 5.5 et le congé courbe bas 5.6. Cette coopération remplit la fonction de butée pour empêcher la déformation par écrasement respectif des terminaisons arrières 11.7 et 12.7 sur l'embout 8.

Un procédé, conforme à l'invention, pour assembler la branche 3 comprend les étapes :
- plier ou fermer la branche 3, de façon à la placer près de la monture 2 ;
- engager par l'extrémité avant 6 la première bande 11 et/ou la deuxième bande 12 respectivement sur le rail haut 21 et le rail bas 22 ;
- guider en translation la première bande 11 et la deuxième bande 12 respectivement sur le rail haut 21 et le rail bas 22, de sorte que la première bande 11 et la deuxième bande 12 recouvrent respectivement la première partie de l'armature 5 et la deuxième partie de l'armature 5 ; et
- ouvrir ou déplier la branche 3, de façon à la placer en position de port de lunettes par un utilisateur.

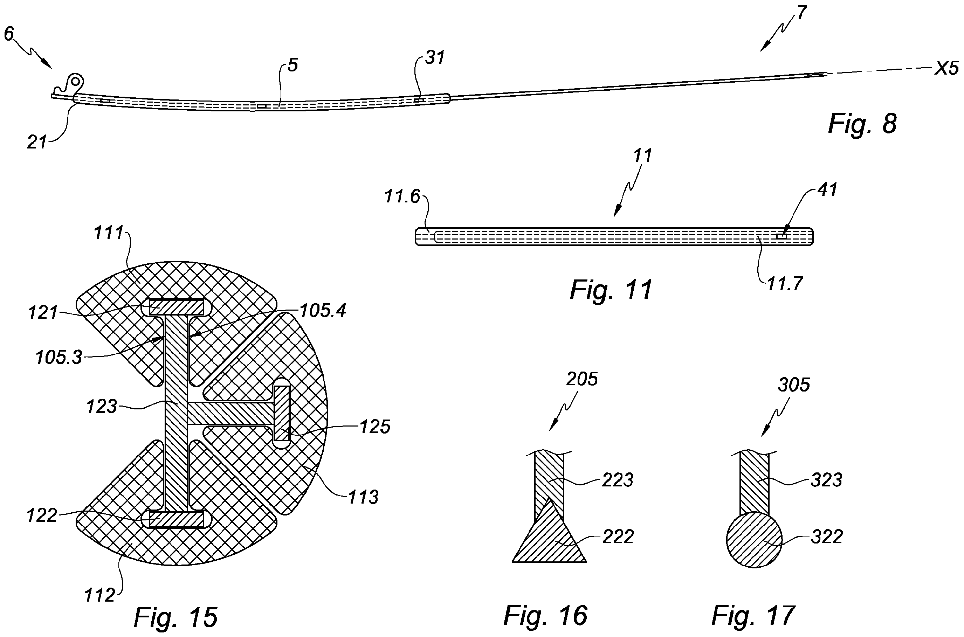

La figure 15 illustre partiellement une branche 103 conforme à un deuxième mode de réalisation de l'invention. La description de la branche 3 donnée ci-avant peut être transposée à la branche 103, à l'exception des différences énoncées ci-après. Un élément de la branche 103 semblable ou correspondant, par sa structure ou par sa fonction, à un élément de la branche 3 porte ci-après la même référence numérique augmentée de 100.

On définit ainsi une armature 105, une première bande 111, une deuxième bande 112, un rail haut 121, un rail bas 122, une âme 123, une face interne 105.3 et une face externe 105.4.

La branche 103 diffère de la branche 3, car la branche 103 comprend en outre une troisième bande 113 et un troisième rail 125. La troisième bande 113 est adaptée pour recouvrir une troisième partie de l'armature 105, en l'occurrence la face externe 105.4. Le troisième rail 125 forme des troisièmes moyens de liaison ménagés sur la face externe 105.4 et adaptés pour guider en translation la troisième bande 113 et pour maintenir la troisième bande 113 sur l'armature 105.

La branche 103 diffère de la branche 3, car au moins deux de ses bandes sont jointives de façon à masquer le bord supérieur, ou le bord inférieur, et la face externe 105.4 de l'armature 105. Comme le montre la figure 15, la première bande 111, la deuxième bande 112 et la troisième bande 113 ont des surfaces obliques correspondantes qui sont jointives deux à deux.

La figure 16 illustre une armature 205 conforme à un troisième mode de réalisation de l'invention. L'armature 205 diffère de l'armature 5, car un rail bas 222 a une section transversale triangulaire, ce qui permet d'habiller la branche avec une bande de forme et d'aspect particuliers.

La figure 17 illustre une armature 305 conforme à un quatrième mode de réalisation de l'invention. L'armature 305 diffère de l'armature 5, car un rail bas 322 a une section transversale circulaire, ce qui permet d'habiller la branche avec une bande de forme et d'aspect particuliers.

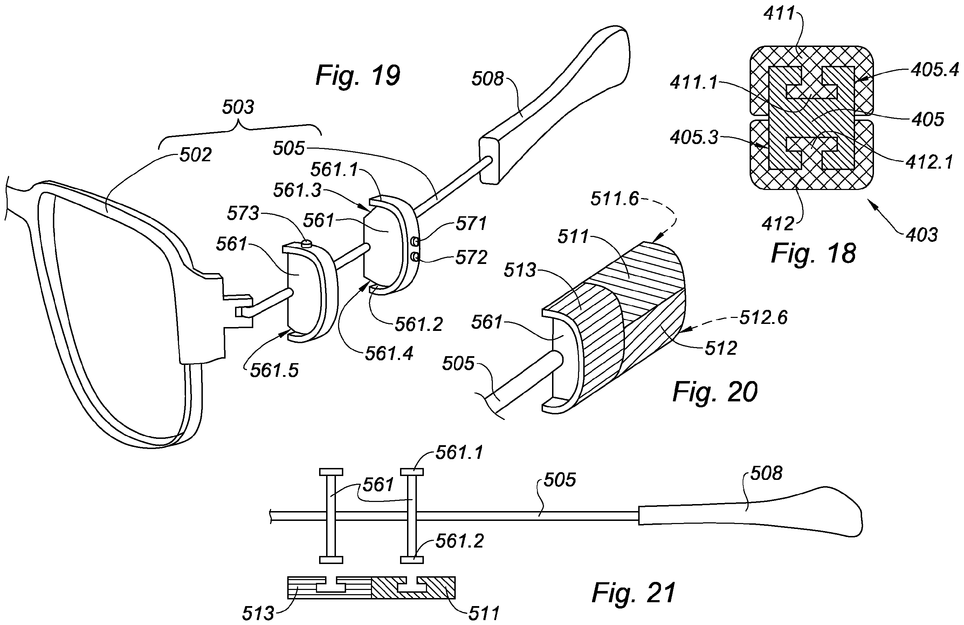

La figure 18 illustre en section une branche 403 conforme à un cinquième mode de réalisation de l'invention. La description de la branche 3 donnée ci-avant peut être transposée à la branche 403, à l'exception des différences énoncées ci-après. Un élément de la branche 403 semblable ou correspondant, par sa structure ou par sa fonction, à un élément de la branche 3 porte ci-après la même référence numérique augmentée de 400.

On définit ainsi une armature 405, une première bande 411, une deuxième bande 412, une face interne 405.3 et une face externe 405.4.

La branche 403 diffère de la branche 3, car elle comporte un rail haut 411.1 et un rail bas 412.1 qui sont de formes mâles et qui sont ménagés respectivement sur la première bande 411 et sur la deuxième bande 412. Le rail haut 411.1 et le rail bas 412.1 coopèrent en translation avec des glissières femelles, en forme de « T » qui sont ménagées respectivement sur le milieu du bord supérieur et sur le milieu du bord inférieur de l'armature 405. En d'autres termes, l'armature 403 présenter une épaisseur significative et les moyens de liaison sont ménagés dans l'épaisseur de l'armature 405. Ainsi, les composants mâles et femelles sont « inversés » par rapport au premier mode de réalisation décrit ci-avant.

Les figures 19, 20 et 21 illustrent en section une branche 503 conforme à un sixième mode de réalisation de l'invention. La description de la branche 3 donnée ci-avant peut être transposée à la branche 503, à l'exception des différences énoncées ci-après. Un élément de la branche 503 semblable ou correspondant, par sa structure ou par sa fonction, à un élément de la branche 3 porte ci-après la même référence numérique augmentée de 500.

On définit ainsi une monture 502, une armature 505, un embout 508, une première bande 511 et une deuxième bande 512.

La branche 503 diffère de la branche 3, car l'armature 505 est munie de plusieurs supports, dont deux sont illustrés avec la référence 561 aux figures 19 à 21. Les supports 561 et équivalents sont sensiblement en forme de demi-disques centrés sur l'armature 505 et perpendiculaires à l'armature 505. La hauteur des supports 561 est d'environ 20 mm.

Les supports 561 comportent chacun des rails 561.1 et 561.2, qui forment des premiers moyens de liaison et des deuxièmes moyens de liaison, qui s'étendent sur la circonférence des supports 561 et qui sont joints entre eux.

Comme le montre la figure 21, un utilisateur peut introduire la première bande 511 et la deuxième bande 512 sur les rails 561.1 et 561.2, suivant une translation curviligne. Alternativement, une bande unique 513 est introduite sur un support 561.

Des ergots 571, 572 et 573 forment des organes de maintien respectivement de la première bande 511, de la deuxième bande 512 et de la bande unique 513. Les ergots 571, 572 et 573 sont semblables, en structure et en fonction, à l'ergot 31 de la branche 3.

Le rail 561.1 présente des découpes ou congés 561.3 et 561.4. De même, le rail 561.2 présente une découpe ou un congé 561.5. Les découpes 561.3, 561.4 et 561.5 forment des extrémités d'introduction respectivement pour les rails 561.1 et 561.2.

Sur la première bande 511 et sur la deuxième bande 512, les extrémités bouchées 511.6 et 512.6 sont conformées pour coopérer par complémentarité de formes respectivement avec le congé 561.3 et 561.4. Cette coopération remplit la fonction de butée pour empêcher la déformation par écrasement des bandes 511 et 512 l'une contre l'autre.

Ainsi, l'utilisateur peut habiller la branche 503.

Selon d'autres caractéristiques de l'invention, avantageuses mais facultatives, prises isolément ou selon toute combinaison techniquement possible :
- Les moyens de liaison s'étendent sur l'armature de manière discontinue ou intermittente.
- Au moins un organe de maintien comprend un organe d'encliquetage élastique d'une bande sur des moyens de liaison.
- Les rails sont monoblocs ou venus de matière avec l'armature, au lieu d'être rapportés sur elle.
- La ligne longitudinale suivant laquelle s'étend l'armature est rectiligne, ou encore brisée.
- Au moins un organe de maintien de l'armature est formé par un trou agencé pour coopérer avec un bossage réalisé, donc disposé, sur la première bande ou sur la deuxième bande.
- Au moins un organe de maintien de l'armature est formé par un orifice borgne, au lieu d'être traversant agencé pour coopérer avec un bossage réalisé, donc disposé, sur la première bande ou sur la deuxième bande. Ainsi, le bossage de l'armature reste masqué par la bande respective, ce qui améliore la qualité esthétique de la branche.
- Au moins un organe de maintien de la première ou deuxième bande est formé par un orifice borgne, au lieu d'être traversant, qui est agencé pour coopérer avec un bossage réalisé, donc disposé, sur l'armature. Ainsi, la première ou deuxième bande peut être relativement plus compacte, car sa structure est peu modifiée.
- Deux rails et deux glissières de l'armature sont en forme d'hélices semblables et dont l'axe commun correspond à la direction longitudinale de l'armature. Ainsi, la branche avec ses bandes présente l'aspect d'un escalier à double hélice ou d'une molécule ADN.

## Revendications

1. Branche (3 ; 103), pour lunettes (1), comportant une armature (5 ; 105 ; 205 ; 305) s'étendant entre une extrémité avant (6), destinée à être articulée sur une monture (2), et une extrémité arrière (7) opposée, la branche (3 ; 103) étant **caractérisée en ce qu'**elle comprend au moins :
- une première bande (11) adaptée pour recouvrir une première partie de l'armature (5), la première bande (11) présentant de préférence une surface externe décorative ;
- une deuxième bande (12) adaptée pour recouvrir une deuxième partie de l'armature (5), la deuxième bande (12) présentant de préférence une surface externe décorative ;
- des premiers moyens de liaison (21 ; 121) ménagés sur ladite première partie de l'armature (5) et formant rail ou glissière, les premiers moyens de liaison (21 ; 121), d'une part, étant adaptés pour guider en translation la première bande (11) et pour maintenir la première bande (11) sur l'armature (5) et, d'autre part, s'étendant jusqu'à l'extrémité avant (6) de façon à permettre l'introduction de la première bande (11) par l'extrémité avant (6) ; et
- des deuxièmes moyens de liaison (22; 122) ménagés sur ladite deuxième partie de l'armature (5) et formant rail ou glissière, les deuxièmes moyens de liaison (22 ; 122), d'une part, étant adaptés pour guider en translation au moins la deuxième bande (12) et pour maintenir la deuxième bande (12) sur l'armature (5) et, d'autre part, s'étendant jusqu'à l'extrémité avant (6) de façon à permettre l'introduction de la deuxième bande (12) par l'extrémité avant (6).

2. Branche (3 ; 103) selon la revendication 1, dans laquelle l'armature (5) présente un bord supérieur (5.1) et un bord inférieur (5.2), les premiers moyens de liaison (21 ; 121) étant agencés sur tout ou partie du bord supérieur (5.1), les deuxièmes moyens de liaison (22 ; 122) étant agencés sur tout ou partie du bord inférieur (5.2).

3. Branche (3 ; 103) selon l'une des revendications précédentes, dans laquelle les premiers moyens de liaison (21) et/ou les deuxièmes moyens de liaison (22) présentent respectivement au moins un élément mâle faisant saillie sur une face interne de l'armature (5) et/ou sur une face externe de l'armature (5), l'élément mâle s'étendant au moins le long d'un tronçon de l'armature (5), et dans laquelle au moins l'une de la première bande (11) et de la deuxième bande (12) présente une rainure (11.1, 12.1) de forme complémentaire à l'élément mâle.

4. Branche (3 ; 103) selon l'une des revendications précédentes, dans laquelle les premiers moyens de liaison (21 ; 121) et/ou les deuxièmes moyens de liaison (22 ; 122) sont semblables.

5. Branche (3 ; 103) selon l'une des revendications précédentes, dans laquelle au moins l'une de la première bande (11) et de la deuxième bande (12) est formée au moins partiellement en un matériau élastiquement déformable, au moins l'une de la première bande (11) et de la deuxième bande (12) étant de préférence issue de moulage.

6. Branche (103) selon l'une des revendications précédentes, dans laquelle au moins deux desdites bandes (111, 112, 113) sont conformées pour être jointives de façon à masquer totalement ou partiellement l'armature (105).

7. Branche (3 ; 103) selon l'une des revendications précédentes, dans lequel au moins l'une de la première bande (11) et de la deuxième bande (12) présente une extrémité bouchée (11.6) agencée pour recouvrir l'extrémité avant (6) de l'armature (5).

8. Branche (3 ; 103) selon l'une des revendications précédentes, dans laquelle l'armature (5) comporte au moins un organe de maintien (31, 32) adapté pour immobiliser la première bande (11) ou la deuxième bande (12) en translation par rapport à l'armature (5), au moins un organe de maintien (31, 32) étant de préférence agencé pour coopérer avec une terminaison arrière (11.7) de la première bande (11) ou avec une terminaison arrière (12.7) de la deuxième bande (12).

9. Lunettes (1) comprenant une monture (2) et étant **caractérisées en ce qu'**elles comprennent en outre au moins une branche (3 ; 103), de préférence deux branches (3 ; 103), selon l'une des revendications précédentes.

10. Procédé d'assemblage d'une branche (3; 103) conforme à l'une des revendications 1 à 8 qui est articulée sur une monture (2) de lunettes (1) conforme à la revendication 9, le procédé comprenant les étapes :
- plier la branche (3 ; 103), de façon à la placer près de la monture (2) ;
- engager par l'extrémité avant (6) la première bande (11) et la deuxième bande (12) respectivement sur les premiers moyens de liaison (21 ; 121) et sur les deuxièmes moyens de liaison (22 ; 122) formant rails ou glissières s'étendant jusqu'à l'extrémité avant (6) ;
- guider en translation la première bande (11) et la deuxième bande (12) respectivement sur les premiers moyens de liaison (21 ; 121) et sur les deuxièmes moyens de liaison (22 ; 122), de sorte que la première bande (11) et la deuxième bande (12) recouvrent respectivement la première partie de l'armature (5; 105) et la deuxième partie de l'armature (5; 105) ; et
- ouvrir la branche (3 ; 103), de façon à la placer en position d'utilisation.

## Patentansprüche

1. Bügel (3; 103) für Brillen (1), ein Gestell (5; 105; 205; 305) umfassend, das sich zwischen einem vorderen Ende (6), das dazu bestimmt ist, an einer Fassung (2) angelenkt zu werden, und einem hinteren, gegenüberliegenden Ende (7) erstreckt, wobei der Bügel (3; 103) **dadurch gekennzeichnet ist, dass** er zumindest Folgendes umfasst:
- ein erstes Band (11), das ausgeführt ist, um einen ersten Abschnitt des Gestells (5) abzudecken, wobei das erste Band (11) vorzugsweise eine dekorative Außenfläche aufweist;
- ein zweites Band (12), das ausgeführt ist, um einen zweiten Abschnitt des Gestells (5) abzudecken, wobei das zweite Band (12) vorzugsweise eine dekorative Außenfläche aufweist;
- erste Verbindungsmittel (21; 121), die auf dem besagten ersten Abschnitt des Gestells (5) ausgeführt sind, und eine Schiene oder Gleitschiene bilden, wobei die ersten Verbindungsmittel (21; 121) einerseits ausgeführt sind, um das erste Band (11) in Vorschubrichtung zu führen, und um das erste Band (11) auf dem Gestell (5) zu halten, und sich andererseits bis zum vorderen Ende (6) erstrecken, um die Einführung des ersten Bandes (11) über das vordere Ende (6) zu ermöglichen; und
- zweite Verbindungsmittel (22; 122), die auf dem besagten zweiten Abschnitt des Gestells (5) ausgeführt sind, und eine Schiene oder Gleitschiene bilden, wobei die zweiten Verbindungsmittel (22; 122) einerseits ausgeführt sind, um zumindest das zweite Band (12) in Vorschubrichtung zu führen, und um das zweite Band (12) auf dem Gestell (5) zu halten, und sich andererseits bis zum vorderen Ende (6) erstrecken, um die Einführung des zweiten Bandes (12) über das vordere Ende (6) zu ermöglichen.

2. Bügel (3; 103) nach Anspruch 1, wobei das Gestell (5) einen oberen Rand (5.1) und einen unteren Rand (5.2) aufweist, die ersten Verbindungsmittel (21; 121) auf dem gesamten einen oberen Rand (5.1) oder einem Teil davon angeordnet sind, die zweiten Verbindungsmittel (22; 122) auf dem gesamten einen unteren Rand (5.2) oder einem Teil davon angeordnet sind.

3. Bügel (3; 103) nach einem der vorhergehenden Ansprüche, wobei die ersten Verbindungsmittel (21) und/ oder die zweiten Verbindungsmittel (22) jeweils zumindest ein Steckelement aufweisen, die über eine Innenfläche des Gestells (5) und/ oder eine Außenfläche des Gestells (5) überstehen, wobei sich das Steckelement zumindest entlang eines Abschnitts des Gestells (5) erstreckt, und wobei zumindest eines des ersten Bandes (11) und des zweiten Bandes (12) eine Nut (11.1, 12.1) in einer ergänzenden Form zum Steckelement aufweist.

4. Bügel (3; 103) nach einem der vorhergehenden Ansprüche, wobei die ersten Verbindungsmittel (21; 121) und/ oder die zweiten Verbindungsmittel (22; 122) einander ähnlich sind.

5. Bügel (3; 103) nach einem der vorhergehenden Ansprüche, wobei zumindest eines des ersten Bandes (11) und des zweiten Bandes (12) zumindest teilweise aus einem elastisch verformbaren Material gebildet wird, wobei zumindest eines des ersten Bandes (11) und des zweiten Bandes (12) vorzugsweise aus einer Abformung stammt.

6. Bügel (103) nach einem der vorhergehenden Ansprüche, wobei zumindest zwei der besagten Bänder (111, 112, 113) ausgeformt sind, um aneinandergesetzt zu sein, um das Gestell (105) vollkommen oder teilweise zu verdecken.

7. Bügel (3; 103) nach einem der vorhergehenden Ansprüche, wobei zumindest eines des ersten Bandes (11) und des zweiten Bandes (12) ein verschlossenes Ende (11.6) aufweist, das angeordnet ist, um das vordere Ende (6) des Gestells (5) abzudecken.

8. Bügel (3; 103) nach einem der vorhergehenden Ansprüche, wobei das Gestell (5) zumindest ein Halteorgan (31, 32) umfasst, das ausgeführt ist, um das erste Band (11) oder das zweite Band (12) im Verhältnis zum Gestell (5) in Vorschubrichtung zu blockieren, wobei zumindest ein Halteorgan (31, 32) vorzugsweise angeordnet ist, um mit einem hinteren Abschluss (11.7) des ersten Bandes (11) oder mit einem hinteren Abschluss (12.7) des zweiten Bandes (12) zusammenzuwirken.

9. Brillen (1), eine Fassung (2) umfassend, und **dadurch gekennzeichnet, dass** sie darüber hinaus zumindest einen Bügel (3; 103), vorzugsweise zwei Bügel (3; 103) nach einem der vorhergehenden Ansprüche umfassen.

10. Verfahren zum Montieren eines Bügels (3; 103) entsprechend einem der Ansprüche 1 bis 8, der an einer Fassung (2) der Brillen (1) entsprechend Anspruch 9 angelenkt ist, wobei das Verfahren die folgenden Schritte umfasst:
- Umlegen des Bügels (3; 103), um ihn nahe an der Fassung (2) zu platzieren;
- Einführen über das vordere Ende (6) des ersten Bandes (11) und des zweiten Bandes (12) jeweils auf die ersten Verbindungsmittel (21; 121) und auf die zweiten Verbindungsmittel (22; 122), welche Schienen oder Gleitschienen bilden, die sich bis zum vorderen Ende (6) erstrecken;
- Führen in Vorschubrichtung des ersten Bandes (11) und des zweiten Bandes (12) jeweils auf die ersten Verbindungsmittel (21; 121) und auf die zweiten Verbindungsmittel (22; 122), sodass das erste Band (11) und das zweite Band (12) jeweils den ersten Abschnitt des Gestells (5; 105) und den zweiten Abschnitt des Gestells (5; 105) abdecken; und
- Öffnen des Bügels (3; 103) um ihn in der Nutzungsposition zu platzieren.

## Claims

1. A sidepiece (3; 103) for eyeglasses (1), comprising a core (5; 105; 205; 305) extending between a front end (6), intended to be articulated onto a frame (2), and an opposite rear end (7), the sidepiece (3; 103) being **characterized in that** it comprises at least:
- a first strip (11) suitable to cover a first part of the core (5), the first strip (11) preferably having a decorative external surface;
- a second strip (12) suitable to cover a second part of the core (5), the second strip (12) preferably having a decorative external surface;
- first connection means (21; 121) arranged on said first part of the core (5) and forming a rail or a slide, wherein the first connection means (21; 121), on one hand, are designed to guide the first strip (11) in translation and to hold the first strip (11) on the core (5) and, on the other hand, are extending as far as the front end (6) so as to allow the first strip (11) to be introduced via the front end (6) ; and
- second connection means (22; 122) arranged on said second part of the core (5) and forming a rail or a slide, wherein the second connection means (22; 122), on one hand, are designed to guide at least the second strip (12) in translation and to hold the second strip (12) on the core (5) and, on the other hand, are extending as far as the front end (6) so as to allow the second strip (12) to be introduced via the front end (6).

2. The sidepiece (3; 103) according to claim 1, wherein the core (5) has an upper edge (5.1) and a lower edge (5.2), the first connection means (21; 121) being arranged on all or part of the upper edge (5.1), the second connection means (22; 122) being arranged on all or part of the lower edge (5.2).

3. The sidepiece (3; 103) according to any one of the preceding claims, wherein the first connection means (21) and/or the second connection means (22) have respectively at least one male element projecting from an internal face of the core (5) and/or from an external face of the core (5), the male element extending at least along a segment of the core (5), and wherein at least one of the first strip (11) and the second strip (12) has a groove having a shape complementary to the male element.

4. The sidepiece (3; 103) according to any one of the preceding claims, wherein the first connection means (21; 121) and/or the second connection means (22; 122) are similar.

5. The sidepiece (3; 103) according to any one of the preceding claims, wherein at least one of the first strip (11) and the second strip (12) is at least partially formed from an elastically deformable material, at least one of the first strip (11) and the second strip (12) being preferably molded.

6. The sidepiece (103) according to any one of the preceding claims, wherein at least two of said strips (111, 112, 113) are formed so as to fit together in order to hide the core (105) either entirely or partially.

7. The sidepiece (3; 103) according to any one of the preceding claims, wherein at least one of the first strip (11) and the second strip (12) has a plugged end (11.6) arranged so as to cover the front end (6) of the core (5).

8. The sidepiece (3; 103) according to any one of the preceding claims, wherein the core (5) comprises at least one holding member (31, 32) designed to immobilize the first strip (11) or the second strip (12) in translation with respect to the core (5), at least one holding member (31, 32) being arranged so as to engage with a rear termination (11.7) of the first strip (11) or with a rear termination (12.7) of the second strip (12).

9. Eyeglasses (1) comprising a frame (2) and being **characterized in that** they further comprise at least one sidepiece (3; 103), preferably two sidepieces (3; 103), according to any one of the preceding claims.

10. A method for assembling a sidepiece (3; 103) according to any one of the claims 1 to 8 which is articulated onto a frame (2) for eyeglasses (1) according to claim 9, the method comprising the steps of:
- folding the sidepiece (3; 103) so as to place it close to the frame (2);
- engaging via the front end (6) the first strip (11) and the second strip (12) respectively on the first connection means (21; 121) and on the second connection means (22; 122) forming some rails or slides extending as far as the front end (6);
- guiding in translation the first strip (11) and the second strip (12) respectively on the first connection means (21; 121) and on the second connection means (22; 122), such that the first strip (11) and the second strip (12) cover respectively the first part of the core (5) and the second part of the core (5); and
- opening the sidepiece (3; 103) in order to place it in a position of use.
